# EUROPÄISCHE PATENTSCHRIFT

(11) **EP 1 985 408 B1**
(45) Veröffentlichungstag und Bekanntmachung des Hinweises auf die Patenterteilung: **07.08.2013**
(21) Anmeldenummer: 08009248.9
(22) Anmeldetag: 19.04.2002
(51) Int. Cl.: B23P 19/06, F16B 37/06

(54) **Funktionselement zur Anbringung an ein Blechteil, aus diesen hergestelltes Zusammenbauteil sowie Verfahren zur Anbringung des Funktionselements an ein Blechteil**
Functional element for attachment to a sheet metal component, assembly component produced thereby and method for attaching a functional element to a sheet metal component
Elément fonctionnel destiné à l'application sur un élément en tôle, composant fabriqué à partir de celui-ci et procédé d'application de l'élément fonctionnel sur un élément en tôle

(30) Priorität: 20.04.2001 DE 10119505
(43) Veröffentlichungstag der Anmeldung: 29.10.2008
(62) Teilanmeldung aus: 02730181.1
(73) Patentinhaber: Profil Verbindungstechnik GmbH & Co. KG, 61381 Friedrichsdorf (DE)
(72) Erfinder: Babej, Jiri, 35423 Lich (DE); Hoessrich, Wolfgang, 61476 Kronberg (DE)
(74) Vertreter: Manitz, Finsterwald & Partner GbR

(56) Entgegenhaltungen:
- EP-B1- 1 497 073
- DE-A1- 3 835 566
- US-A- 5 564 873

## Beschreibung

Die vorliegende Erfindung betrifft ein Funktionselement zur Anbringung an ein Blechteil, wie beispielsweise Mutterelement oder Bolzenelement mit einem Körperteil bzw. Kopfteil, der in einen zylindrischen Abschnitt übergeht sowie ein aus dem Funktionselement und einem Blechteil hergestelltes Zusammenbauteil und ein Verfahren zur Anbringung des Funktionselements an ein Blechteil.

Ein Funktionselement der eingangs genannten Art wird von der Firma Profil Verbindungstechnik GmbH & Co. KG, Friedrichsdorf, Deutschland unter der Bezeichnung EMF in der Form eines Mutterelements angeboten.

Mit diesem Element, das einen Ringflansch aufweist, kann ein Bauteil auf der dem Ringflansch abgewandten Seite des Blechteils an diesem angebracht werden, und zwar mittels eines Schraubbolzens, der in das Gewinde des Mutterelements eingreift und das Bauteil und das Blechteil gegeneinander verspannt. Ein ähnliches Funktionselement mit einem Ringflansch geht aus der Patentschrift US_A_5,564,873 hervor. Das EMF-Element wird an ein Blechteil mittels des Verfahrens angebracht, das in der EP-A-0 713 982 im Zusammenhang mit deren Fig. 16 und 17 beschrieben ist, wobei dieses Verfahren für sich in der entsprechenden europäischen Teilanmeldung EP-A-0 922 866 beansprucht ist. Ein Funktionselement der eingangs genannten Art in Form eines Bolzenelements ist ebenfalls bekannt, und zwar in Form des sogenannten SBF Bolzenelements der Firma Profil Verbindungstechnik GmbH & Co. KG, das unter anderem im deutschen Patent 3447006 zusammen mit dem dazugehörigen Anbringungsverfahren beschrieben ist. Sowohl das EMF Element als auch das SBF Element haben sich in der Praxis bewährt. Bei dem EMF Element wird das Blechteil nur unwesentlich verformt und bleibt im Bereich der Anbringung des Funktionselements zumindest im wesentlichen in der gleichen Ebene wie das umliegende Blechmaterial.

Bei dem SBF Bolzen dagegen wird eine gerundete Vertiefung im Blechteil erzeugt und dies führt zu einer relativ steifen Anbindung des Bolzenelementes am Blechteil.

Aufgabe der vorliegenden Erfindung ist es, ein Funktionselement vorzusehen, das eine besonders steife Anbindung am Blechteil sicherstellt, so dass nicht nur Zug-und Kompressionskräfte über das Element am Blechteil übertragen werden können, sondern auch Quer-und Scherkräfte, wobei die Anbindung auch bei wechselnder Beanspruchung eine lange Lebensdauer aufweisen soll und nicht zu der Ausbildung von Ermüdungsrissen neigt. Weiterhin will die Erfindung ein Zusammenbauteil bestehend aus dem Funktionselement und einem Blechteil schaffen, das entsprechende Eigenschaften aufweist und ein Verfahren zur Anbringung des Funktionselements zur Verfügung stellen, das eine qualitativ hochwertige Anbringung des Funktionselements am Blechteil sicherstellt, ohne besonders aufwendig in der Realisierung zu sein.

In dieser Anmeldung hat die Bezeichnung "Funktionselement" seine normale Bedeutung, die Beispiele für solche Funktionselemente sind Befestigungselemente wie Mutterelemente oder Bolzenelemente, die die Anbringung eines weiteren Bauteils an einem Blechteil ermöglichen. Die Bezeichnung umfasst aber auch alle Arten von Hohlelementen, die beispielsweise zur Aufnahme von eingesteckten Teilen oder als drehbare Lagerung für eine Welle dienen, wie auch alle Elemente, die mit einem Schaftteil versehen sind, beispielsweise zur Aufnahme von einem Klip oder zur drehbaren Lagerung eines hohlen Teiles.

Zur Lösung der Aufgabe wird erfindungsgemäß ein Funktionselement der eingangs genannten Art vorgesehen, das mit den kennzeichnenden Merkmalen vom Anspruch 1 versehen ist. Das erfindungsgemäße Funktionselement zeichnet sich somit aus,
dass das Funktionselement keinen Ringflansch aufweist, sondern der Übergang vom Körperteil bzw. Kopfteil in den Abschnitt durch eine zumindest im wesentlichen konusförmige Fläche gebildet ist, die unmittelbar in den Körperteil bzw. Kopfteil übergeht und eine Anlagefläche für einen entsprechenden konusförmigen Bereich eines Blechteils bildet, der eine Öffnung aufweist,
dass mehrere Verdrehsicherungsnasen an der konusförmigen Fläche des Funktionselements vorgesehen sind, sich über die gesamte Länge der konusförmigen Fläche in axialer Ebene erstrecken und gleichmäßig um die Längsachse des Funktionselements verteilt sind,
dass die Verdrehsicherungsnasen sich in axialer Richtung über mindestens einen Teil der axialen Länge des zylindrischen Abschnitts erstrecken, dass das freie Stirnende des zylindrischen Abschnitts vorzugsweise als Stanzabschnitt ausgebildet ist und
dass nach der Anbringung des Funktionselements an ein Blechteil das Material der sich entlang des zylindrischen Abschnitts erstreckenden Verdrehsicherungsnasen in axialer Richtung verschiebbar ist, um an den Stellen der Verdrehsicherungsnasen radial nach außen erstreckende Materialvorsprünge zu bilden, die am Randbereich der Öffnung des vorgesehenen Blechteils zu liegen kommen.

Ein entsprechendes Zusammenbauteil wird im Anspruch 4 angegeben

Das erfindungsgemäße Verfahren geht aus dem Anspruch 7 hervor. Der eingeschlossene Konuswinkel der konusförmigen Fläche liegt vorzugsweise im Bereich zwischen 80 und 120 und beträgt insbesondere 90.

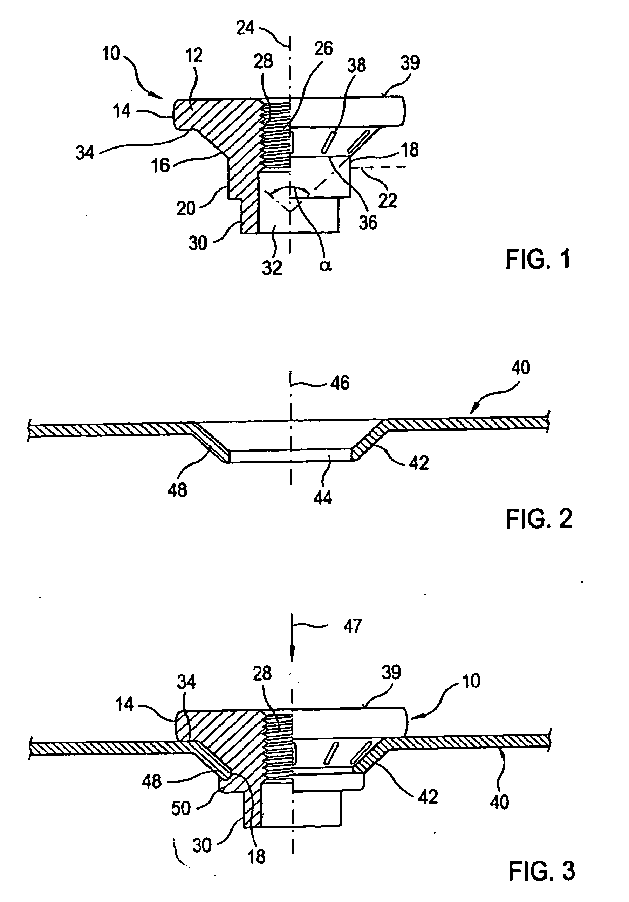

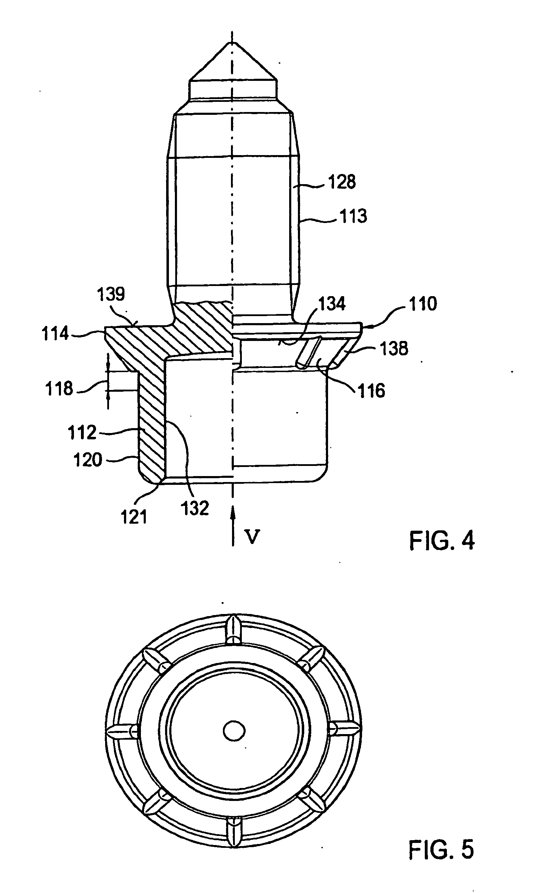

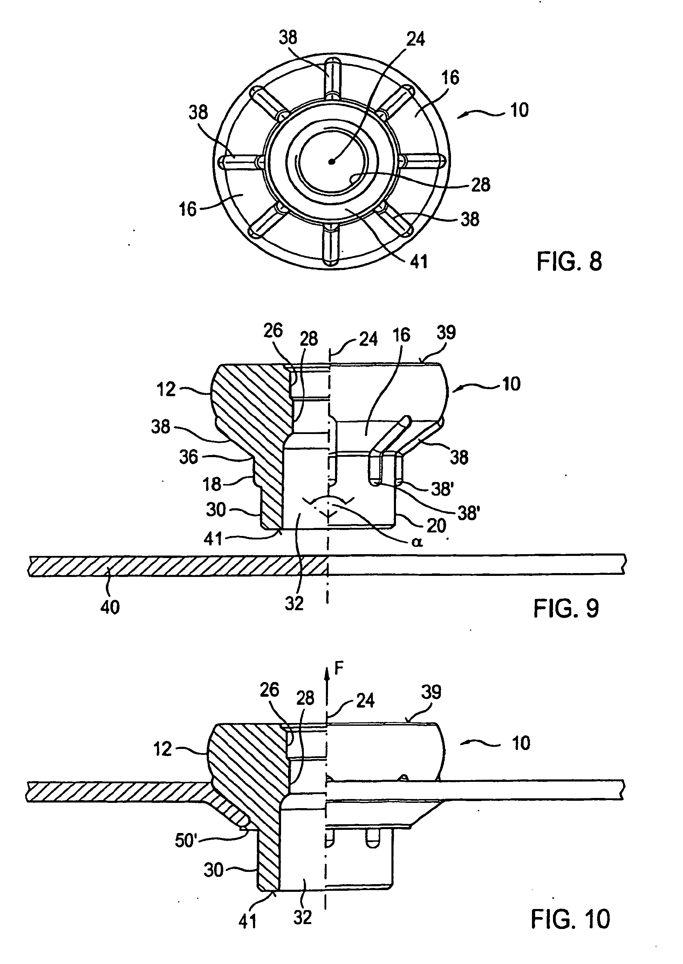

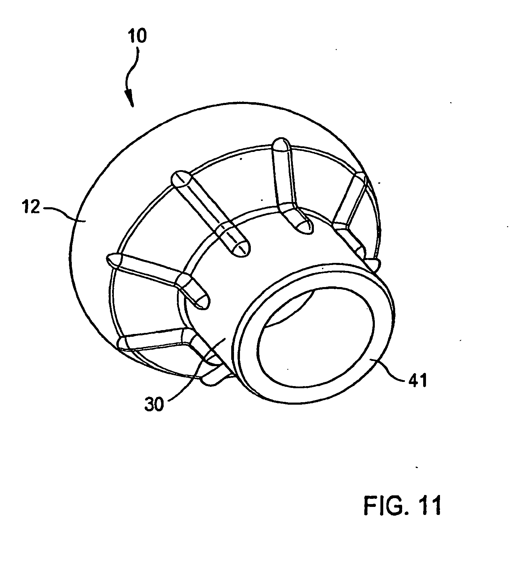

Der Vollständigkeit halber soll auch noch kurz auf die DE-A-3835566 verwiesen werden, die ein Funktionselement zeigt, der keinen Ringflansch aufweist. Das Element weist aber auch keine konusförmige Fläche sonder eine art konkave Blechanlagefläche mit ausgeprägten sich in der Längsrichtung erstreckende Verdrehsicherungsnuten. Problematisch bei dem dort gezeigten Element ist, dass eine erheblich Blechumformung erforderlich ist, die zu einer ausgeprägten Verdünnung des Blchteils im Bereich der Anbindung des Elements führt, das im Blechteil vollständig versenkt ist. Ferner neigt das Blechteil aufgrund der erheblichen Grad der Blechumformung im Bereich des Nietbördels zu Rissenbildung. Die Erfindung wird nachfolgend näher erläutert, anhand von Ausführungsbeispielen unter Bezugnahme auf die Zeichnungen, welche zeigen in den Fig. 1 bis 3 eine hier nicht beanspructe Ausführungsform eines Mutterelements und in den Fig 4 bis 7 eine hier nicht beanspruchte Ausfuhrungsform eines Bolzenelements während die Fig. 8 bis 11 sich mit einem erfindungsgemäßen Mutterelement befassen, wobei die Erläuterung der Fig. 1 bis 7 die Funktionselemente mit Ringflansch betreffen für ein Verständnis des Elements gemäß den fig, 8 bis 11 ohne Ringflansch hilfreich sind. Konkret zeigen die Figuren:
- Fig. 1: ein teilweise in axialer Richtung geschnittenes Funktionselement in Form eines Mutterelements,
- Fig. 2: eine schematische Darstellung eines Blechteils, das zur Aufnahme des Funktionselements der Fig. 1 vorbereitet ist,
- Fig. 3: ein Zusammenbauteil, das aus dem Funktionselement der Fig. 1 und dem Blechteil der Fig. 2 gebildet ist,
- Fig. 4: eine Seitenansicht eines teilweise in Längsrichtung geschnittenes Funktionselements in Form eines Bolzenelements,
- Fig. 5: eine Stirnansicht des Bolzenelements der Fig. 4 entsprechend der Pfeilrichtung V der Fig. 4,
- Fig. 6: eine perspektivische Darstellung des Bolzenelements der Fig. 4 und 5,
- Fig. 7: eine teilweise geschnittene Darstellung eines Zusammenbau teils, das aus dem Bolzenelement der Fig. 4 bis 6 und einem Blechteil entsprechend der Fig. 2 gebildet ist,
- Fig. 8: eine Ansicht einer erfindungsgemäßen Funktionselements von der Unterseite gesehen,
- Fig. 9: eine Seitenansicht des Funktionselements der Fig. 8, wobei die linke Hälfte der Darstellung in axialer Richtung geschnitten ist und das Element oberhalb eines Blechteils gezeigt ist, dass vom Element durchstanzt wird,
- Fig. 10: die Zusammenbausituation nach Anbringung des Funktionselements der Fig. 9 an das dort gezeigte Blechteil und
- Fig. 11: eine perspektivische Darstellung des Funktionselements der Fig. 8.

Die Fig. 1 zeigt ein Funktionselement 10 mit einem einstückigem Körperteil 12, das einen Ringflansch 14 aufweist, der über eine konusförmige Fläche 16 und einen Halsteil 18 in einen Nietabschnitt 20 übergeht. Die Grenze zwischen dem Halsteil 18 und dem Nietabschnitt 20 liegt bei 22.

Der Körper 16 des Funktionselements 10 weist außerdem eine konzentrisch zur Längsachse 24 angeordnete Bohrung 26 mit einem Gewindezylinder 28 auf. Am unteren Ende des Nietabschnitts 20 in Fig. 1 geht dieser in eine zylindrische Fortsetzung 30 über, die als zum Nietabschnitt 20 gehörig gedacht werden kann. Die Bohrung 28 des Mutterelementes 10 weist im Bereich der zylindrischen Fortsetzung 30 einen Bereich 42 auf mit einem Durchmesser, der geringfügig grösser ist als der Grunddurchmesser des Gewindezylinders 28.

Die konusförmige Fläche 16 erstreckt sich konkret zwischen einer zur Auflagefläche des Funktionselements gehörenden ringförmigen Unterseite 34 des Ringflansches 14 bis zu der Grenze 36 zum Halsteil 18 und weist einen Konuswinkel a von in diesem Beispiel 90 auf. Gleichmäßig verteilt um die konusförmige Fläche herum befinden sich Verdrehsicherungsmerkmale 38, die hier die Form von Nasen aufweisen, die sich jeweils in axiale Ebenen des Elementes erstrecken. Es sind hier acht solche Verdrehsicherungsnasen 38 vorgesehen, es könnten aber auch mehr oder weniger sein. Die Verdrehsicherungsnasen könnten auch die Form von Vertiefungen haben.

Die Fig. 2 zeigt ein Blechteil 40, das zur Aufnahme des Funktionselements 10 der Fig. 1 vorbereitet ist. Konkret weist das Blechteil 40 eine konusförmige Vertiefung 42 mit einem Loch 44 im Bodenbereich der konusförmigen Vertiefung auf. Der Konuswinkel des konusförmigen Bereiches 42 des Blechteils 40 entspricht dem Konuswinkel a der konusförmigen Fläche 16 des Funktionselements 10. Das Loch 44 weist einen Durchmesser auf, der dem Durchmesser des Halsteils 18 des Funktionselements 10 der Fig. 1 entspricht, wobei das Loch 44 auch einen etwas größeren Durchmesser aufweisen kann, beispielsweise im Bereich von 0,2 mm grösser, um eine leichte Einführung des Funktionselements in das Loch zu ermöglichen. Es wäre auch denkbar, das Loch 44 geringfügig kleiner zu machen als den Durchmesser des Halsteils 18, wodurch durch Einführung des Halsteils 18 durch das Loch 44 dieses leicht aufgeweitet wird. Die konusförmige Form der Vertiefung 42 erleichtert auf jeden Fall die Ausrichtung des Funktionselements 10 mit dem Blechteil bei Einführung des Funktionselements. Die Achse 46 des Loches 44 flüchtet dabei mit der Längsachse 24 des Funktionselements 10.

Die Blechvorbereitung erfolgt üblicherweise in einer Stanzpresse oder in einer Station eines Folgeverbundwerkzeuges. In einer weiteren Presse (oder in der gleichen Presse) bzw. in einer weiteren Station eines Folgeverbundwerkzeuges wird das Funktionselement 10 dann unter Anwendung eines Setzkopfes in das Blechteil 40 eingebracht und an diesem angebracht, wobei das sich ergebende Zusammenbauteil in Fig. 3 dargestellt ist und nachfolgend näher erläutert wird. Es soll kurz zum Ausdruck gebracht werden, dass die Anbringung von Funktionselementen an Blechteilen in Pressen und in Folgeverbundwerkzeugen oder unter Anwendung von Robotern oder besonderen Gestelleinrichtungen an sich gut bekannt ist und hier nicht im Detail erläutert wird.

Die Zusammenbausituation gemäß Fig. 3 lässt erkennen, dass ein Ringwulst 50 aus dem Nietabschnitt 20 des Funktionselementes durch Verschiebung von Material des Nietabschnitts in Richtung auf den Ringflansch 14 zu gebildet ist. Dieser Ringwulst 50 bildet zusammen mit dem Halsteil 18, der bei der Verschiebung des Materials des Nietabschnitts zur Bildung des Ringwulstes 50 nur leicht verformt wird, eine klemmende Aufnahme für den Randbereich 48 des Loches 44 des Blechteils 40 und führt im übrigen dazu, dass das Blechmaterial im konusförmigen Bereich 42 unter einem kompressiven Druck im Bereich zwischen der ringförmigen Auflagefläche 34 des Funktionselements und der durch den Ringwulst 50 und dem Halsteil 18 gebildeten klemmenden Aufnahme für den Randbereich 48 des Loches des Blechteils. Obwohl hier nicht gezeigt, erfolgt hier die Verschiebung des Materials des Nietabschnitts in Richtung auf den Ringflansch 14 zu in einer Matrize, die eine konusförmige Vertiefung aufweist, die in Anlage gegen die Außenseite des konusförmigen Bereiches 42 des Blechteils gelangt, so dass das Blechmaterial gleichzeitig radial nach innen gedrückt wird, wodurch es zu einem formschlüssigen Eingriff zwischen dem Blechmaterial im konusförmigen Bereich 42 und den Verdrehsicherungsmerkmalen 38 kommt.

Bei der Verschiebung des Materials aus dem Bereich des Nietabschnitts auf den Ringflansch zu, wird von oben in Pfeilrichtung 47 auf die Stirnseite 39 des Funktionselements 10 gedrückt. Da relativ viel Material im Körperteil 12 des Funktionselements zwischen der Stirnseite 39 und dem Nietabschnitt vorhanden ist, wird dieser Bereich des Funktionselements nicht verformt, so dass eine Verformung des Gewindezylinders 28 nicht zu befürchten ist. Auch die zylindrische Fortsetzung 30 des Nietabschnitts wird bei der Anbringung des Funktionselements nicht verformt, sondern lediglich in eine Bohrung der (nicht gezeigten) Matrize geführt.

Das Zusammenbauteil gemäß Fig. 3 hat unter anderem den Vorteil, dass ein weiteres Bauteil auf der einen oder anderen Seite angebracht werden kann. Beispielsweise kann ein Bauteil auf der Stirnseite 39 befestigt werden, in diesem Fall mittels eines Bolzens, der von oben kommend in Fig. 3 in den Gewindezylinder 28 eingeschraubt wird. Durch die konusförmige Ausbildung des Bereiches 42 des Blechteils und die Ausbildung des Ringwulstes 50 ist die Anbringung des Funktionselements am Blechteil so fest bzw. steif, dass die Anbringung eines Bauteils an diese Stirnseite 39 ohne weiteres zulässig ist. Dabei kann die Höhe des Ringflansches 14, d. h. die axiale Dicke des Ringflansches 14 gewählt werden, um eine Abstandsfunktion zwischen dem weiteren Bauteil und dem Blechteil 40 zu gewährleisten.

Es besteht aber auch die Möglichkeit ein Bauteil auf der unteren Seite des Blechteils 40 in Fig. 3 anzubringen. In diesem Falle wäre der Bolzen von unten in den Gewindezylinder 28 einzuführen. Das Bauteil könnte sich auf der Unterseite des Blechteils gegenüber dem Ringflansch 14 abstützen oder an der Unterseite des Ringwulstes 50 oder bei geeigneter Dimensionierung der zylindrischen Fortsetzung 30 an der freien Stirnseite dieser Fortsetzung. Auch könnte die zylindrische Fortsetzung 30 als Lagefläche für ein drehbares Teil dienen, das ebenfalls mit einem Bolzen gesichert wird, der von unten kommend in den Gewindezylinder 28 eingeführt wird.

Die Fig. 4 bis 7 zeigen ein weiteres Beispiel eines Funktionselements hier in Form eines Bolzenelements.

Für die nachfolgende Beschreibung werden für Teile, die die gleiche Form oder Funktion aufweisen wie bei dem Mutterelement gemäß Fig. 1 bis 3 die gleichen Bezugszeichen verwendet, jedoch mit der Grundzahl 100 erhöht. Es kann davon ausgegangen werden, dass die bisherige Beschreibung auch für die entsprechend gekennzeichneten Teile der Ausführungsform gemäß Fig. 4 bis 7 gilt, es sei denn, etwas Gegenteiliges wird gesagt.

Das Bolzenelement 110 weist einen Kopfteil 112 auf, der zumindest im wesentlichen dem Körperteil 12 des Mutterelementes der Fig. 1 entspricht und das Bolzenelement hat außerdem einen Schaftteil 113, der sich von der Oberseite 139 des Ringflansches 114 weg erstreckt. Der Schaftteil 113 trägt einen Gewindezylinder 128.

Der Ringflansch 114 geht in diesem Beispiel über eine ringförmige Auflagefläche 134 in eine konusförmige Anlagefläche 116 über, die unmittelbar in einen Nietabschnitt 120 übergeht, der hier mit Stanz-und Nietmerkmalen an seinem unteren Ende 121 ausgestattet ist, die im Prinzip den Stanz-und Nietmerkmale bei einem herkömmlichen SBF Bolzen identisch sind. D. h., man kann sich das Bolzenelement gemäß Fig. 4 bis 7 so vorstellen, dass jetzt kein Halsteil vorgesehen ist, was grundsätzlich auch bei der Ausbildung des Funktionselements gemäß Fig. 1 bis 3 möglich ist.

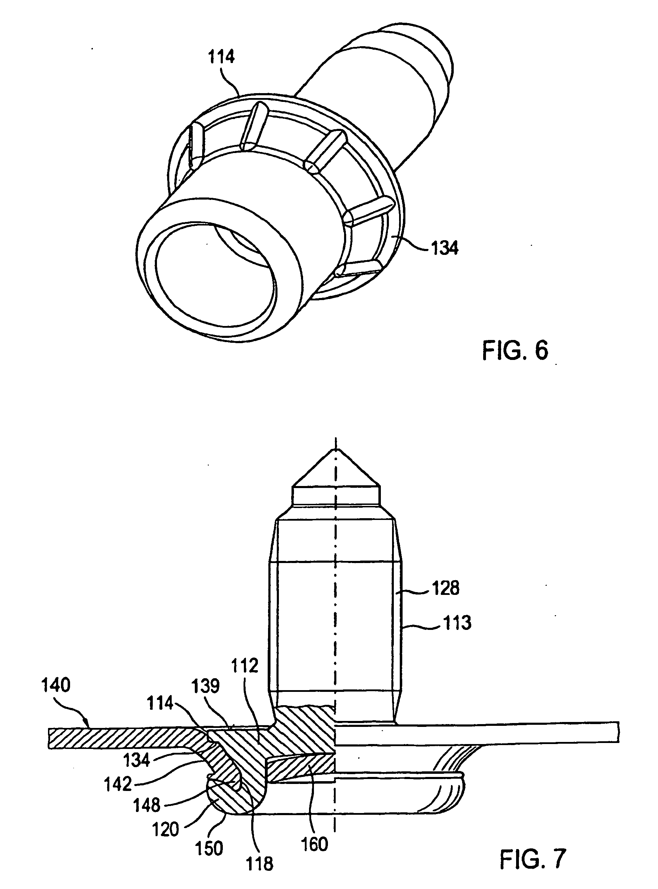

Andererseits wird der obere Bereich 118 des Stanz-und Nietabschnitts 120 hier zumindest im wesentlichen nicht verformt, wie aus Fig. 7 hervorgeht, so dass dieser Bereich ggf. als Halsteil bezeichnet werden könnte.

Ähnlich wie bei der Ausführungsform gemäß Fig. 1 bis 3 sind hier Verdrehsicherungsmerkmale 138 vorgesehen, die hier die Form von Nasen aufweisen, wobei sich, im Unterschied zu der Ausbildung des Mutterelementes gemäß Fig. 1 bis 3, die Nasen 138 über die gesamte axiale Länge der konusförmigen Fläche 116 erstrecken und in der Unterseite 134 des Ringflansches 114 sowie im Halsbereich 118 auslaufen. Eine entsprechende Ausbildung der Verdrehsicherungsnasen 38 bei der Ausführungsform gemäß Fig. 1 bis 3 wäre auch möglich. Auch wäre es möglich, die Verdrehsicherungsnasen 138 gemäß Fig. 4 bis 7 mit Verdrehsicherungsvertiefungen zu ersetzen, die dann entsprechend auszulegen wären wie bei dem Ausführungsbeispiel wie bei Fig. 1 bis 3. Man merkt in diesem Beispiel, dass die axiale Dicke des Ringflansches 114 hier deutlich geringer ausgebildet ist als bei der Ausführungsform gemäß Fig. 1 bis 3 und dass nach Anbringung des Bolzenelements am Blechteil 140 gemäß Fig. 7 die obere Stirnseite 139 des Kopfteils 112 des Bolzenelementes leicht zurückversetzt gegenüber der Ebene der Oberseite des Blechteils 140 in der Darstellung gemäß Fig. 7 zu liegen kommt. Man merkt auch aus der Fig. 7, dass die axiale Dicke des Ringflansches 114 deutlich kleiner ist als die dicker des Blechteils 140. Dies ist aber keinesfalls zwingend erforderlich, sondern der Ringflansch 114 bei dem Ausführungsbeispiel gemäß Fig. 7 kann dicker ausgeführt werden als die Dicke des Blechteils 140 und das Bolzenelement kann so am Blechteil 140 angebracht werden, dass die Ringfläche 134 in etwa in der Ebene der Oberseite des Blechteils 140 zu liegen kommt, so dass die Stirnseite 139 des Kopfteils 112 deutlich oberhalb des Blechteils 140 angeordnet ist und auch hier eine Abstandsfunktion realisiert. Auch bestünde die Möglichkeit, den Ringflansch 14 der Ausführungsform gemäß Fig. 1 bis 3 so zu realisieren, wie in Fig. 7 gezeigt.

Der Ringwulst 150 gemäß Fig. 7 ist auch anders ausgeführt als der Ringwulst 50 des Funktionselements gemäß Fig. 1 bis 3. Da das Bolzenelement der Fig. 4 bis 7 selbststanzend in das Blechteil eingebracht wird, unter Anwendung des Verfahrens gemäß dem deutschen Patent 3447006, wird der Nietabschnitt 120 nach dem Durchstanzen des Blechteils 140 mittels einer entsprechenden Umformfläche der verwendeten Matrize so umgebördelt, dass er die gerundete Form 150 annimmt, die in Fig. 7 gezeigt ist. Dabei wird auch das Blechteil so verformt, wie ebenfalls aus Fig. 7 ersichtlich ist. Beim Durchstanzen des Blechteils entsteht ein Stanzbutzen 160, der, wie im oben genannten deutschen Patent beschrieben, innerhalb der zylindrischen Ausnehmung 132 im Nietabschnitt 120 festgeklemmt wird, wodurch einerseits die Problematik der Entfernung des Stanzbutzens 160 entfällt und andererseits eine erhöhte Steifigkeit im Bereich des Kopfteils 112 erreicht wird. Trotz dieser unterschiedlichen Ausbildung des Ringwulstes 150 wird auch hier das Blechmaterial 148 aus dem Randbereich, der durchstanzten Öffnung klemmend im umgebördelten Nietabschnitt 120 aufgenommen und es entsteht auch hier eine kompressive Spannung im konusförmigen Bereich 142 zwischen der Auflagefläche 134 des Ringflansches 114 und der vom Nietabschnitt 120 gegebenenfalls gemeinsam mit dem"Halsteil" 118 gebildeten klemmenden Aufnahme für den Randbereich 148 des Stanzloches.

Obwohl die Ausbildung des Nietabschnittes 120 des Bolzenelements gemäß Fig. 1 bis 7 entsprechend dem Nietabschnitt eines herkömmlichen SBF Bolzens ausgeführt wurde, ist dies nicht zwingend erforderlich. Man könnte z. B. die Ausbildung dieses Bereiches entsprechend der Ausbildung des Nietabschnitts 20 des Funktionselementes gemäß Fig. 1 bis 3 ausbilden und das Bolzenelement gemäß Fig. 1 bis 4 mit dem gleichen Verfahren am Blechteil 40 anbringen, das im Zusammenhang mit Fig. 1 bis 3 beschrieben wurde. Ebenfalls bestünde die Möglichkeit, das Funktionselement gemäß Fig. 1 bis 3 mit einem zylindrischen Nietabschnitt entsprechend dem Nietabschnitt 120 des Bolzenelements gemäß Fig. 1 bis 4 zu versehen und das Mutterelement entweder selbststanzend oder unter Anwendung eines an sich bekannten vorlaufenden Lochstempels in das Blechteil anzubringen.

Bei der Ausführungsform gemäß Fig. 1 bis 7 wird auch hier eine Situation erreicht, wo das Blechmaterial im konusförmigen Bereich 142 unter Kompressionsspannung gesetzt wird, so dass einerseits die Ausbildung von Ermüdungsrissen nicht zu befürchten ist, andererseits eine sehr steife hochwertige Anbindung des Funktionselements am Blechteil sichergestellt ist.

Die Figuren 8 bis 11 zeigen eine erste Ausführungsform eines erfindungsgemäßen Funktionselements sowie die Zusammenbausituation mit dem Blechteil und haben eine starke Ähnlichkeit mit der Ausführung gemäß Fig. 1 bis 3. Aus diesem Grunde werden in den Figuren 8 bis 11 die gleichen Bezugszeichen verwendet wie bei der Ausführungsform gemäß Fig. 1 bis 3 und die Beschreibung der Ausführungsform gemäß Fig. 1 bis 3 gilt genauso für die Ausführungsform gemäß Fig. 8 bis 11, es sei denn, es wird etwas gegenteiliges gesagt. Mit anderen Worten gilt die Beschreibung der Figuren 1 bis 3 im Zusammenhang mit den dort verwendeten Bezugszeichen genauso für die Ausführung gemäß Fig. 8 bis 11.

Als erster Unterschied ist ersichtlich, dass das Funktionselement 10 der Fig. 8 bis 11 keinen Ringflansch aufweist, sondern die konusförmige Fläche 16 geht unmittelbar in den Kopfteil des Elements über.

Ferner ist aus den Figuren ersichtlich, dass die Verdrehsicherungsnasen 38 sich nicht nur über die volle Länge der konusförmigen Fläche 16 in axialen Ebenen erstrecken, sondern darüber hinaus sich ferner über die obere Hälfte (in Fig. 9) des zylindrischen Abschnitts 20 erstrecken, wo sie in gerundeten Enden 38'enden.

Bei dieser Ausführungsform ist der zylindrische Abschnitt 20 nicht mit einem Halsteil 18 versehen, obwohl dies möglich wäre, wenn das Funktionselement nicht wie hier selbst stanzend ausgeführt ist.

Bei der Ausführungsform gemäß Fig. 8 bis 11 wird das freie Stirnende 41 als Stanzabschnitt ausgebildet und ermöglicht es, das Blechteil 40 mit dem Element selbst durchzustanzen. Zu diesem Zweck wird das Blechteil oberhalb einer Matrize abgestützt mit einer mittleren Bohrung, die den zylindrischen Abschnitt 20 des Funktionselements 10 gleitend aufnimmt, wobei diese mittlere Passage über eine sich senkrecht zur Längsachse 24 erstreckende Ringschulter in eine konusförmige Vertiefung übergeht, die der Form der Außenfläche der konusförmigen Ausformung bzw. des konusförmigen Kragens des Blechteils entspricht. Diese konusförmige Vertiefung der Matrize geht dann in eine Stirnfläche der Matrize über, die wiederum senkrecht zur Längsachse 24 der Matrize steht.

Beim Durchstanzen des Blechteils wird das Blechteil durch das Stirnende 41 des Funktionselements zunächst konusförmig eingedellt und dann wird ein Stanzbutzen aus dem Bodenbereich der konusförmigen Eindellung herausgeschnitten und durch das freie Stirnende 41 des zylindrischen Abschnitts 20 des Funktionselements 10 durch die mittlere Passage der Matrize hindurchgedrückt bis in einen Freiraum, aus dem der Stanzbutzen entfernt werden kann.

Bei dieser weiteren Bewegung des Funktionselements in die Matrize hinein, dient die sich senkrecht zur Längsachse der Matrize erstreckende Ringschulter dazu, das Material der Verdrehsicherungsnasen 38 im Bereich des Zylinderabschnitts 20 so zu verformen, dass dieses Material zu radialen Vorsprüngen umgebildet wird an den Stellen der bisherigen Verdrehsicherungsnasen, wobei diese Materialvorsprünge, bei 50' in Fig. 10 angedeutet, über den Randbereich der Öffnung der konusförmigen Ausformung des Blechteils zu liegen kommen und vorzugsweise formschlüssig in diesen Randbereich eingreifen, so dass eine Verdrehsicherheit nicht nur im Bereich der konusförmigen Fläche des Funktionselements, sondern auch im Randbereich der Öffnung der konusförmigen Ausformung des Blechteils vorliegt.

Man merkt, dass die Verbindung zwischen dem Blechteil und dem Funktionselement, wie bei den weiteren Ausführungsformen, im wesentlichen nur im Bereich der konusförmigen Fläche des Funktionselements vorliegt.

Durch die radialen Vorsprünge 50'gelingt es, einen sehr hohen Auszieh- bzw. Auspresswiderstand zu erreichen, d. h. gegen Kräfte, die in Richtung F der Fig. 10 wirken; mit anderen Worten gegen Kräfte, die in axialer Richtung des Funktionselements vom zylindrischen Abschnitt 20 in Richtung des Körperteils 12 wirken. Auch hier tritt der Vorteil ein, dass, wenn solche Ausziehkräfte wirken, diese versuchen, die konusförmige Ausformung des Blechteils flacher zu drücken und das Blech hat gegen solche Kräfte einen sehr hohen Widerstand, u. a. da es sich am Element noch fester abstützt, so dass eine sehr stabile Verbindung vorliegt. Solche Kräfte können beispielsweise entstehen, wenn ein weiteres Bauteil auf der oberen Stirnseite 39 des Funktionselements 10 angeschraubt wird oder nach dem Anschrauben entsprechende Kräfte auf das Funktionselement ausübt. Es besteht bei dieser Ausführungsform aber auch die Möglichkeit, ein weiteres Bauteil auf der Unterseite des Blechteils 40 in Fig. 10 anzuschrauben, wobei der zylindrische Abschnitt 20 dann als Führung oder Zentrierung dienen kann. Das weitere anzuschraubende Bauteil muss dann üblicherweise eine Form haben, die ein sattes Anliegen am Blechteil 40 im Bereich der konusförmigen Ausformung sicherstellt. Ein solches weiteres Bauteil kann dann durch eine Schraube gesichert werden, die in Fig. 10 von unten kommend in den Gewindezylinder 28 eingeschraubt wird, wobei üblicherweise Maßnahmen getroffen werden, beispielsweise über ein Abstandstück, um sicherzustellen, dass das weitere Bauteil aufgrund der Anschraubkräfte satt am Blechteil 40 anliegt.

Der Zylinderabschnitt 20 könnte auch als Lagerzapfen für ein drehbar am Element 10 zu befestigendes Bauteil dienen, wobei ein solches drehbar gelagertes Bauteil dann durch die axial in das Gewinde 28 eingeschraubte Schraube in axialer Richtung gesichert werden kann.

Die gerundeten Enden 38'der Verdrehsicherungsnasen 38 stellen sicher, dass das Blechteil beim Einstanzen nicht unzulässig eingerissen wird, so dass Ermüdungsrisse im Blechteil an den Stellen der Verdrehsicherungsnasen bzw. an den Stellen der radialen Vorsprünge 50'nicht zu befürchten sind.

Obwohl das Funktionselement 10 der Fig. 8 bis 11 selbst stanzend eingebracht wird, kann das Element genauso in ein vorgelochtes Bauteil eingesetzt werden, falls dies erwünscht ist.

Ein Vorteil des erfindungsgemäßen Funktionselements liegt darin, dass mit einem Element einen breiten Bereich von Blechteildicken abgedeckt werden kann, so dass bspw. Das Funktionselement nach den Figuren 8 bis 11 mit Blechteilen mit Dicken im Bereich 0.6mm bis 4mm verwendet werden kann, wobei diese Dickenangaben nicht einschränkend zu verstehen sind und auch nicht auf die Ausführung gemäß Fig. 8 bis 11 beschränkt sind.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u. a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z. B. AlMg5. Auch kommen Funktionselemente aus höherfesten Magnesiumlegierungen wie bspw. AM50 in Frage.

## Patentansprüche

1. Funktionselement (10) zur Anbringung an ein Blechteil, wie bspw. ein Mutterelement (10) oder ein Bolzenelement mit einem Körperteil (12) bzw. Kopfteil, der in einen zylindrischen Abschnitt (20) übergeht,
**dadurch gekennzeichnet,**
**dass** das Funktionselement keinen Ringflansch aufweist, sondern der Übergang vom Körperteil (12) bzw. Kopfteil in den Abschnitt (20) durch eine zumindest im wesentlichen konusförmige Fläche (16) gebildet ist, die unmittelbar in den Körperteil (12) bzw. Kopfteil übergeht und eine Anlagefläche für einen entsprechenden konusförmigen Bereich (42) eines Blechteils (40) bildet, der eine Öffnung aufweist,
**dass** mehrere Verdrehsicherungsnasen an der konusförmigen Fläche des Funktionselements vorgesehen sind, sich über die gesamte Länge der konusförmigen Fläche in axialer Ebene erstrecken und gleichmäßig um die Längsachse des Funktionselements verteilt sind,
**dass** die Verdrehsicherungsnasen sich in axialer Richtung über mindestens einen Teil der axialen Länge des zylindrischen Abschnitts (20) erstrecken, dass das freie Stirnende des zylindrischen Abschnitts vorzugsweise als Stanzabschnitt ausgebildet ist und dass nach der Anbringung des Funktionselements an ein Blechteil das Material der sich entlang des zylindrischen Abschnitts (20) erstreckenden Verdrehsicherungsnasen in axialer Richtung verschiebbar ist, um an den Stellen der Verdrehsicherungsnasen radial nach außen erstreckende Materialvorsprünge zu bilden, die am
Randbereich der Öffnung des vorgesehenen Blechteils zu liegen kommen.

2. Funktionselement nach Anspruch 1,
**dadurch gekennzeichnet,**
**daß** der eingeschlossene Konuswinkel (α) der konusförmigen Fläche vorzugsweise im Bereich zwischen 80° und 120° liegt und insbesondere etwa 90° beträgt.

3. Funktionselement nach einem der vorhergehenden Ansprüche,
**dadurch gekennzeichnet,**
**daß** die konusförmige Fläche (16) über einen zylindrischen Halsteil (18) in den Nietabschnitt (20) übergeht, wobei der Halsteil (18) vorzugsweise eine axiale Länge aufweist, welche mindestens in etwa der Blechdicke entspricht und vorzugsweise etwas größer als diese ist.

4. Zusammenbauteil bestehend aus einem Funktionselement nach einem der Ansprüche 1 bis 3 in Form eines Mutterelements (10) oder eines Bolzenelements (110) in Kombination mit einem Blechteil, der einen konusförmigen Bereich (42) auweist, der der konusförmigen Anlagefläche des Funktionselements entspricht und eine Öffnung aufweist,
**dadurch gekennzeichnet,**
**dass** der konusförmige Bereich (42) des Blechteils an der konusförmigen Anlagefläche des Funktionselements anliegt und dass das Material der sich entlang des zylindrischen Abschnitts (20) erstreckenden Verdrehsicherungsnasen in axialer Richtung verschoben ist und an den Stellen der Verdrehsicherungsnasen radial nach außen erstreckende Materialvorsprünge bilden, die am Randbereich der Öffnung des vorgesehenen Blechteils anliegen.

5. Zusammenbauteil nach Anspruch 4,
**dadurch gekennzeichnet,**
**daß** das Blechmaterial des Blechteils (40) im konusförmigen Bereich (42) formschlüssig mit den Verdrehsicherungsnasen im Eingriff ist.

6. Zusammenbauteil nach einem der vorhergehenden Ansprüche 4 oder 5,
durch **gekennzeichnet**,
dass Material, das aus den Verdrehsicherungsnasen am zylindrischen Abschnitt des Elements entstanden ist und an den Stellen der Verdrehsicherungsmerkmale am Randbereich der Öffnung des konusförmigen Bereichs des Blechteils anliegt, und formschlüssig in diese Stellungsweise eingreift, verwendet wird, um einerseits eine zusätzliche Verdrehsicherung an dieser Stelle zu erreichen und andererseits das Element gegen Auszieh- oder Ausdrückkräfte im Blechteil zu sichern, die in der Richtung vom zylindrischen Abschnitt (20) bis zum Körperteil bzw. Kopfteil des Funktionselements wirken.

7. Verfahren zur Anbringung eines Funktionselements nach einem der Ansprüche 1 bis 3 bzw. zur Herstellung eines Zusammenbauteils nach einem der Ansprüche 4 bis 6,
**dadurch gekennzeichnet,**
**daß** eine konusförmige Vertiefung (42) in einem Blechteil (40) angefertigt wird, dessen Konuswinkel (α) zumindest im wesentlichen dem Konuswinkel (α) der konusförmigen Fläche (16) des Funktionselements (10) entspricht, wobei ein Loch (44) im und konzentrisch zur konusförmigen Vertiefung (42) vorgesehen ist, dessen Durchmesser zumindest im wesentlichen dem Durchmesser des zylindrischen Abschnittes (20) des Funktionselements entspricht oder etwas größer als dieser ist, daß der Abschnitt (20) des Funktionselements (10) durch das Loch (44) der konusförmigen Vertiefung (42) des Blechteils hindurchgeführt wird, so daß der konusförmige Bereich der konusförmigen Vertiefung (42) in etwa in Anlage mit der konusförmigen Fläche (16) des Funktionselements, und dass das Material von erhaben am Zylinderabschnitt des Funktionselements vorgesehenen Verdrehsicherungsnasen durch Verschiebung des Materials in axialer Richtung des Zylinderabschnitts auf den Körperteil des Funktionselements zu, die durch die verwendete Matrize bewirkt wird, zu radialen Vorsprüngen führt, die an den Stellen der Verdrehsicherungsnasen vorliegen und am Randbereich der Öffnung der konusförmigen Ausformung des Blechteils anliegen und formschlüssig in diese eingreifen.

## Claims

1. A functional element (10) for the attachment to a sheet metal part, such as for example a nut element (10) or a bolt element having a body portion (12) or a head portion respectively, which merges into a cylindrical section (20),
**characterized in that**
the functional element has no ring flange, but rather the transition from the body portion (12) or the head portion to the section (20) is formed by an at least substantially conical surface (16), which conical surface directly merges into the body portion (12) or the head portion and forms a contact surface for a corresponding conical region (42) of a sheet metal part (40) which has an opening;
**in that** a plurality of noses providing security against rotation are provided at the conical surface of the functional element which extend over the overall length of the conical surface in an axial plane and which are uniformly distributed about the longitudinal axis of the functional element;
**in that** the noses providing security against rotation extend over at least a part of the axial length of the cylindrical section (20) in the axial direction; **in that** the free end face of the cylindrical section is preferably formed as a piercing section and **in that**, after the attachment of the functional element to a sheet metal part, the material of the noses providing security against rotation which extend along the cylindrical section (20) can be displaced in the axial direction in order to form radially outwardly extending material projections at the positions of the noses providing security against rotation, with the material projections coming to lie at the rim of the opening of the conical formation of the sheet metal part.

2. A functional element in accordance with claim 1,
**characterized in that**
the included cone angle (α) of the conical surface preferably lies in the range between 80° and 120° and in particular amounts to approximately 90°.

3. A functional element in accordance with one of the preceding claims,
**characterized in that**
the conical surface (16) merges via a cylindrical throat part (18) into the rivet section (20), wherein the throat part (18) preferably has an axial length which corresponds at least approximately to the sheet metal thickness and is preferably somewhat larger than this.

4. A component assembly composed of a functional element in accordance with any one of the preceding claims 1 to 3 in the form of a nut elements (10) or a bolt element (110) in combination with a sheet metal part which has a conical region (42) which corresponds to the conical contact surface of the functional element and which has an opening,
**characterized in that**
the conical region (42) of the sheet metal part contacts the conical contact surface of the functional element and **in that** the material of the noses providing security against rotation, which extend along the cylindrical section (20), is displaced in the axial direction and forms radially outwardly extending material projections at the positions of the noses providing security against rotation, with the material projections coming to lie at the rim of the opening of the provided sheet metal part.

5. A component assembly in accordance with claim 4,
**characterized in that**
the sheet metal material of the sheet metal part (40) is in engagement with the noses providing security against rotation in the conical region (42) in a form-locked manner.

6. A component assembly in accordance with one of the preceding claims 4 or 5,
**characterized in that**
material which has arisen from the noses providing security against rotation at the cylindrical section of the element and which material contacts the edge region of the opening of the conical region of the sheet metal part at the positions of the features providing security against rotation and which engages in form-locked manner into this formation locally is used, on the one hand, to achieve an additional security against rotation at this point, and, on the other hand, to secure the element against pull-out or push-out forces in the sheet metal part which act in the direction from the cylindrical section (20) to the body portion or head portion of the functional element.

7. A method for the attachment of a functional element in accordance with one of the claims 1 to 3 and/or for the manufacture of a component assembly in accordance with one of the claims 4 to 6, **characterized in that**
a conical recess (42) is manufactured in a sheet metal part (40), with the cone angle (α) of the conical recess corresponding at least substantially to the cone angle (α) of the conical surface (16) of the functional element (10), with a hole (44) being provided in and concentric to the conical recess (42), with the diameter of the hole corresponding at least substantially to the diameter of the cylindrical section (20) of the functional element or being somewhat larger than this; **in that** the section (20) of the functional element (10) is passed through the hole (44) of the conical recess (42) of the sheet metal part so that the conical region of the conical recess (42) enters approximately into contact with the conical surface (16) of the functional element; and **in that** the material from noses providing security against rotation and provided in raised form on the cylinder section of the functional element leads, by displacement of the material in the axial direction of the cylinder section towards the body portion of the functional element, which is brought about by the die button that is used, to radial projections which are present at the positions of the noses providing security against rotation, which contact the rim zone of the opening of the conical formation of the sheet metal part and which engage into this conical formation in form-locked manner.

## Revendications

1. Élément fonctionnel (10) destiné au montage sur une pièce en tôle, comme par exemple un élément formant écrou (10) ou un élément boulon comportant une partie de corps (12) ou une partie de tête, qui se transforme en une portion cylindrique (20),
**caractérisé en ce que**
l'élément fonctionnel ne comporte aucune bride annulaire, mais la transition de la partie de corps (12) ou de la partie de tête vers la portion (20) est formée par une surface (16) au moins sensiblement conique qui se transforme directement dans la partie de corps (12) ou dans la partie de tête et forme une surface d'appui pour une zone conique correspondante (42) d'une pièce en tôle (14) qui présente une ouverture,
**en ce qu'**il est prévu plusieurs becs de blocage antirotation sur la surface conique de l'élément fonctionnel, qui s'étendent sur toute la longueur de la surface conique dans un plan axial et sont répartis régulièrement autour de l'axe longitudinal de l'élément fonctionnel,
**en ce que** les becs de blocage antirotation s'étendent en direction axiale sur une partie au moins de la longueur axiale de la portion cylindrique (20), **en ce que** l'extrémité frontale libre de la portion cylindrique est réalisée de préférence sous forme de portion poinçonnée et **en ce qu'**après le montage de l'élément fonctionnel sur une pièce en tôle le matériau des becs de blocage antirotation s'étendant le long de la portion cylindrique (20) est déplaçable en direction axiale pour former, aux emplacements des becs de blocage antirotation, des saillies de matériau qui s'étendent radialement vers l'extérieur et qui viennent se retrouver dans la zone de bord de l'ouverture de la pièce en tôle prévue.

2. Élément fonctionnel selon la revendication 1, **caractérisé en ce que** l'angle de cône (α) enfermé par la surface conique est de préférence dans la plage entre 80° et 120°, et s'élève en particulier à environ 90°.

3. Élément fonctionnel selon l'une des revendications précédentes, **caractérisé en ce que** la surface conique (16) se transforme dans la portion cylindrique (20) via une partie de col cylindrique (18), ladite partie de col (18) présentant une longueur axiale qui correspond au moins approximativement à l'épaisseur de tôle et est de préférence légèrement supérieure à cette dernière.

4. Composant d'assemblage constitué par un élément fonctionnel selon l'une des revendications 1 à 3 sous la forme d'un élément formant écrou (10) ou d'un élément formant boulon (110) en combinaison avec une pièce en tôle, qui présente une zone de forme conique (42) qui correspond à la surface d'appui de forme conique de l'élément fonctionnel et qui présente une ouverture,
**caractérisé en ce que**
la zone de forme conique (42) de la pièce en tôle est appliquée contre la surface d'appui de forme conique de l'élément fonctionnel, et **en ce que** le matériau des becs de blocage antirotation s'étendant le long de la portion cylindrique (20) est déplacé en direction axiale et forme, aux emplacements des becs de blocage antirotation, des saillies de matériau s'étendant radialement vers l'extérieur, qui s'appuient contre la zone de bord de l'ouverture de la pièce en tôle prévue.

5. Composant d'assemblage selon la revendication 4,
**caractérisé en ce que** le matériau de la pièce en tôle (40) est en engagement par coopération de formes avec les becs de blocage antirotation dans la zone de forme conique (42).

6. Composant d'assemblage selon l'une des revendications 4 ou 5,
**caractérisé en ce que** le matériau, qui résulte des becs de blocage antirotation sur la portion cylindrique de l'élément et qui prend appui aux emplacements des caractéristiques de blocage antirotation dans la zone de bord de l'ouverture de la zone conique de la pièce en tôle et s'engage en coopération de formes dans ce positionnement, est utilisé afin d'obtenir d'une part un blocage antirotation supplémentaire à cet emplacement et de bloquer d'autre part l'élément dans la pièce en tôle à l'encontre des forces d'extraction ou d'éjection qui agissent dans la direction de la portion cylindrique (20) jusqu'à la partie de corps ou la partie de tête de l'élément fonctionnel.

7. Procédé pour monter un élément fonctionnel selon l'une des revendications 1 à 3 ou pour réaliser un composant d'assemblage selon l'une des revendications 4 à 6,
**caractérisé en ce que**
on ménage un renfoncement conique (42) dans une pièce en tôle (40) dont l'angle de cône (α) correspond au moins sensiblement à l'angle de cône (α) de la surface conique (16) de l'élément fonctionnel (10), un trou (44) étant prévu dans le renfoncement conique (42) et concentriquement à celui-ci, dont le diamètre correspond au moins sensiblement au diamètre de la portion cylindrique (20) de l'élément fonctionnel ou et légèrement supérieur à celui-ci, **en ce que** la portion (20) de l'élément fonctionnel (10) est menée à travers le trou (44) du renfoncement conique (42) de la pièce en tôle, de sorte que la zone conique du renfoncement conique (42) vient approximativement en appui avec la surface conique (16) de l'élément fonctionnel, et **en ce que** le matériau de bec de blocage antirotation prévus de manière à se dresser sur la portion cylindrique de l'élément fonctionnel par déplacement du matériau en direction axiale de la portion cylindrique en direction de la partie de corps, provoqué par la matrice utilisée, mène à la formation de saillies radiales qui se présentent aux emplacements des becs de blocage antirotation, qui s'appliquent à la zone de bord de l'ouverture de la conformation conique de la pièce en tôle et qui s'engagent dans celle-ci par coopération de formes.
